# DEMANDE DE BREVET EUROPEEN

(11) **EP 2 940 333 A1**
(43) Date de publication de la demande: **04.11.2015**
(21) Numéro de dépôt: 15164660.1
(22) Date de dépôt: 22.04.2015
(51) Int. Cl.: F16C 43/04, F16C 19/26, F16C 33/46, F16C 33/58, F16C 19/22, F16C 25/08, F16C 41/04

(54) **PROCEDE DE MONTAGE DE CORPS ROULANTS CYLINDRIQUES A L'INTERIEUR D'UN ORGANE EXTERIEUR CREUX, SOUS-ENSEMBLE ET PALIER A CONTACT DE ROULEMENT OBTENUS PAR CE PROCEDE**

(30) Priorité: 28.04.2014 FR 1453802
(71) Demandeur: NTN-SNR Roulements, 74000 Annecy (FR)
(72) Inventeur: Bonnaudet, Aurélien, 74000 Annecy (FR)
(74) Mandataire: Bugnion Genève

(57) **Abrégé**

On procède au montage de corps roulants cylindriques (18) à l'intérieur d'un organe extérieur creux (12) dans lequel est formé un chemin de roulement extérieur annulaire (30) tourné radialement vers l'intérieur, en maintenant les corps roulants cylindriques (18) radialement en appui contre une face cylindrique (16) tournée radialement vers l'extérieur d'un organe intérieur (14), à l'aide d'une bague d'assemblage élastique (20) étirée entourant les corps roulants cylindriques (18), de manière à former un sous-ensemble cohérent (10); puis en insérant le sous-ensemble cohérent (10) dans l'organe extérieur (12) de façon à ce que les corps roulants cylindriques (18) viennent en regard du chemin de roulement extérieur (30), par un mouvement de translation axiale provoquant une mise en appui de la bague d'assemblage élastique (20) contre une face d'appui (28) de l'organe extérieur (12), puis une migration axiale de la bague d'assemblage élastique (20) par rapport aux corps roulants cylindriques (18), puis une éjection de la bague d'assemblage élastique (20) qui libère les corps roulants cylindriques (18). L'éjection de la bague d'assemblage élastique (20) provoque une détente partielle de la bague d'assemblage élastique (20) qui rétrécit en venant se positionner en appui sur une portée annulaire de retenue (24) présentant un périmètre inférieur au périmètre de la bague d'assemblage élastique (20) dans un état étiré et supérieur au périmètre de la bague d'assemblage élastique (20) dans un état complètement détendu, la portée de retenue (24) étant située axialement à distance des corps roulants cylindriques (18).

## Description

### DOMAINE TECHNIQUE DE L'INVENTION

L'invention a trait à l'assemblage d'un palier à roulement à corps roulants cylindriques, et notamment à rouleaux ou à aiguilles. Elle a trait en particulier à un procédé de montage d'un palier, à un sous-ensemble pouvant être préassemblé, stocké, et acheminé jusqu'au lieu d'assemblage final du palier, et à un palier résultant d'un tel assemblage.

### ETAT DE LA TECHNIQUE ANTERIEURE

Pour le transport ou l'assemblage des roulements, on utilise couramment des bagues d'assemblage dont la fonction est de maintenir les corps roulants dans une position souhaitée avant et pendant leur montage final dans une bague extérieure de roulement. Ainsi est-il proposé dans le document DE102010063281 de loger des corps roulants cylindriques entre deux cylindres en carton, le cylindre extérieur étant légèrement ondulé et ayant, dans un état non déformé, un diamètre inférieur au diamètre de l'enveloppe cylindrique définie par les corps roulants, de manière à générer par déformation élastique des forces suffisantes pour maintenir les corps roulants en position contre le cylindre intérieur. Deux bouchons viennent clore les ouvertures axiales du cylindre intérieur. Ces bouchons présentent des rebords extérieurs en interférence avec les corps roulants. Le sous-ensemble constitué par les corps roulants cylindriques les cylindres et les bouchons est livré tel quel au client, qui procède au montage des corps roulants dans une bague extérieure de roulement en insérant le sous-ensemble axialement dans la bague. Ce mouvement s'accompagne d'une éjection de la bague d'assemblage extérieure en carton, qu'il convient ensuite d'évacuer. On peut ensuite enlever les bouchons et insérer un arbre sur lequel est formé un chemin de roulement à l'intérieur du volume délimité par les corps roulant, en repoussant la bague d'assemblage intérieure en carton, qui est éjectée et qu'il convient ensuite d'évacuer.

Ce procédé permet de prépositionner des corps roulants entre deux bagues d'assemblage pour les emmagasiner, les transporter et finalement les monter entre un corps de palier et un arbre, mais nécessite, lors de l'assemblage final, de pouvoir accéder aux bagues d'assemblage en carton pour les évacuer. Il n'est donc pas adapté à des situations où le montage final a lieu dans un espace confiné, par exemple dans un carter de moteur ou de boîte de transmission.

On connaît par le document US 2,474,016 un sous-ensemble cohérent destiné à un palier à roulement et comportant au moins un organe intérieur sur lequel est formée une face cylindrique tournée radialement vers l'extérieur et définissant un axe d'insertion, des corps roulants cylindriques, et une bague d'assemblage métallique maintenant les corps roulants cylindriques radialement en contact avec la face cylindrique. Ce sous-ensemble cohérent peut être ainsi stocké en attendant son montage définitif. Lors du montage définitif, rien n'est prévu pour extraire la bague d'assemblage, qui reste au contact des corps roulants. Cette solution n'est pas optimale durant la vie du roulement, car la bague d'assemblage interfère avec les corps roulants. De plus, cette solution nécessite de prévoir pour la bague d'assemblage un matériau compatible avec les conditions d'utilisation du roulement, par exemple des conditions de température et de pollution chimique, ce qui limite le choix de matériau, et renchérit le coût de la bague d'assemblage.

### EXPOSE DE L'INVENTION

L'invention vise à remédier aux inconvénients de l'état de la technique et à proposer des moyens permettant un assemblage de corps roulants cylindriques dans un organe extérieur tel qu'un corps de palier ou une bague extérieure de roulement, qui puisse se dérouler dans un volume confiné auquel il est difficile d'accéder à la fin de l'assemblage.

Pour ce faire est proposé, suivant un premier aspect de l'invention un procédé de montage de corps roulants cylindriques à l'intérieur d'un organe extérieur creux dans lequel est formé un chemin de roulement extérieur annulaire tourné radialement vers l'intérieur, selon lequel:
- on maintient les corps roulants cylindriques radialement en appui contre une face cylindrique tournée radialement vers l'extérieur d'un organe intérieur, à l'aide d'une bague d'assemblage élastique étirée dans un état étiré entourant les corps roulants cylindriques, de manière à former un sous-ensemble cohérent; puis
- on insère le sous-ensemble cohérent dans l'organe extérieur de façon à ce que les corps roulants cylindriques viennent en regard du chemin de roulement extérieur, par un mouvement de translation axiale provoquant une mise en appui de la bague d'assemblage élastique contre une face d'appui de l'organe extérieur, puis une migration axiale de la bague d'assemblage élastique par rapport aux corps roulants cylindriques, puis une éjection de la bague d'assemblage élastique qui libère les corps roulants cylindriques et provoque la détente partielle de la bague d'assemblage élastique qui rétrécit en venant se positionner en appui sur une portée annulaire de retenue présentant un périmètre inférieur au périmètre de la bague d'assemblage élastique dans l'état étiré et supérieur au périmètre de la bague d'assemblage élastique dans un état complètement détendu, la portée de retenue étant située axialement à distance des corps roulants cylindriques.

Le procédé est particulièrement adapté à des conditions de montage "en aveugle", dans lesquelles l'organe extérieur est peu accessible, par exemple situé à l'intérieur d'un carter, et notamment un carter de moteur ou de boîte de transmission.

Suivant un mode de réalisation, on insère le sous-ensemble cohérent dans l'organe extérieur par une ouverture de l'organe extérieur ayant un diamètre extérieur supérieur ou égal au diamètre du chemin de roulement extérieur et débouchant sur la face d'appui. On peut avantageusement prévoir un chanfrein entre le chemin de roulement extérieur et la face d'appui.

Suivant un autre aspect de l'invention, celle-ci a trait à un sous-ensemble cohérent destiné à un palier à roulement et comportant au moins un organe intérieur sur lequel est formée une face cylindrique tournée radialement vers l'extérieur, des corps roulants cylindriques, une bague d'assemblage élastique étirée dans un état étiré entourant les corps roulants cylindriques et les maintenant radialement en contact avec la face cylindrique, et au moins une portée de retenue présentant un périmètre inférieur au périmètre de la bague d'assemblage élastique étirée et supérieur au périmètre de la bague d'assemblage élastique complètement détendue, la portée de retenue étant située axialement à distance des corps roulants cylindriques. L'élasticité de la bague d'assemblage permet à la fois le maintien des corps roulants avant la phase finale de montage, et un rétrécissement de la bague après son éjection. Le sous-ensemble assure ainsi lui-même la fonction de maintien de la bague d'assemblage après son éjection. La portée de retenue peut être formée sur l'organe intérieur ou sur une cage de guidage des corps roulants cylindriques, ou encore sur un outil de montage qui est ensuite extrait de l'espace éventuellement confiné où l'assemblage a eu lieu.

De préférence, le sous-ensemble présente un plan de symétrie perpendiculaire à l'axe de révolution ce qui évite d'avoir à orienter le sous-ensemble avant son insertion dans l'organe extérieur.

L'organe intérieur peut être lui-même une bague d'assemblage ou un outil d'assemblage qui est ensuite extrait par mouvement axial. Suivant un mode particulièrement avantageux, la face cylindrique tournée radialement vers l'extérieur de l'organe intérieur est un chemin de roulement intérieur, l'organe intérieur pouvant être un arbre, un axe de pivotement ou une bague intérieure de roulement.

Suivant un autre aspect de l'invention, celle-ci a trait à un palier à roulement comportant au moins un organe intérieur sur lequel est formé un chemin de roulement intérieur annulaire tourné radialement vers l'extérieur et définissant un axe de révolution du palier, un organe extérieur creux dans lequel est formé un chemin de roulement extérieur annulaire tourné radialement vers l'intérieur, des corps roulants cylindriques et une bague d'assemblage élastique sous tension enserrant une portée de retenue située axialement à distance des corps roulants, la bague d'assemblage élastique étant apte à se déformer élastiquement de manière à atteindre un diamètre supérieur au diamètre du chemin de roulement extérieur. Le palier ainsi défini peut notamment être produit par le procédé de montage précédemment décrit.

Suivant un mode particulier de réalisation de l'invention, s'appliquant aussi bien au procédé qu'au sous-ensemble préassemblé et au palier résultant, la portée de retenue est solidaire de l'organe intérieur. Alternativement la portée de retenue peut être solidaire d'une cage de guidage des corps roulants cylindriques.

L'organe extérieur peut être une bague extérieure de roulement.

De même, l'organe intérieur est une bague intérieure de roulement, un axe de pivotement ou un arbre.

De préférence, l'organe intérieur comporte au moins un épaulement de guidage des corps roulants cylindriques, situé à une extrémité axiale de la face cylindrique, et de préférence deux épaulements situés axialement de part et d'autre de la face cylindrique.

La portée de retenue pour réceptionner la bague élastique d'assemblage peut être formée sur l'épaulement.

De préférence, la portée de retenue comporte une gorge annulaire formant un logement pour la bague d'assemblage. De préférence, cette gorge présente une largeur, mesurée axialement, qui est plus grande que la largeur de la bague d'assemblage élastique, mesurée axialement, ceci pour garantir que la bague d'assemblage vient bien se loger dans la gorge.

De préférence, la bague d'assemblage élastique présente une section circulaire dans un plan axial. Cette forme est favorable à une migration combinant reptation et roulage sur les corps roulants. De plus, elle permet de mieux maîtriser la phase d'éjection de la bague est sa réception par la portée de retenue.

### BREVE DESCRIPTION DES FIGURES

D'autres caractéristiques et avantages de l'invention ressortiront à la lecture de la description qui suit, en référence aux figures annexées, qui illustrent :
- la figure 1, une vue schématique d'une première étape d'assemblage d'un sous-ensemble dans un organe extérieur creux, selon un premier mode de réalisation de l'invention;
- la figure 2, une vue schématique d'une deuxième étape d'assemblage du sous-ensemble dans l'organe extérieur creux, selon le premier mode de réalisation de l'invention;
- la figure 3, une vue schématique d'une première étape d'assemblage du sous-ensemble dans l'organe extérieur creux, selon le premier mode de réalisation de l'invention;
- la figure 4, une vue schématique d'une première étape d'assemblage d'un sous-ensemble dans un organe extérieur creux, selon un deuxième mode de réalisation de l'invention;
- la figure 5, une vue schématique d'une deuxième étape d'assemblage du sous-ensemble dans l'organe extérieur creux, selon le deuxième mode de réalisation de l'invention;
- la figure 6, une vue schématique d'une première étape d'assemblage du sous-ensemble dans l'organe extérieur creux, selon le deuxième mode de réalisation de l'invention.

Pour plus de clarté, les éléments identiques ou similaires sont repérés par des signes de référence identiques sur l'ensemble des figures.

### DESCRIPTION DÉTAILLÉE DE MODES DE REALISATION

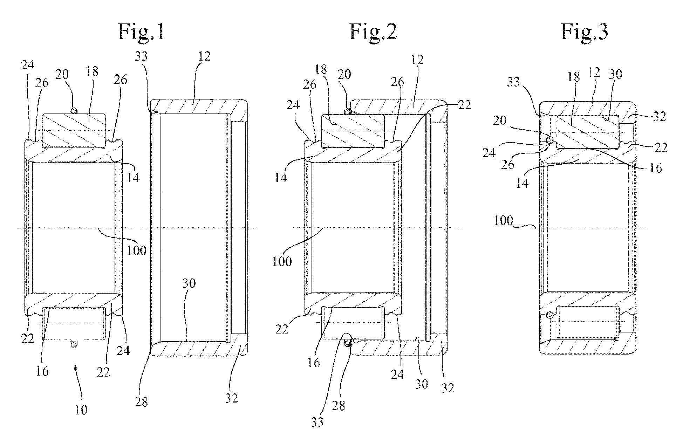

Sur la figure **1** est illustré un sous-ensemble préassemblé 10 positionné en regard et à distance d'un organe extérieur creux constitué ici par une bague extérieure de roulement 12.

Le sous-ensemble 10 comporte dans ce mode de réalisation un organe intérieur constitué par une bague intérieure de roulement 14 sur laquelle est formée un chemin de roulement cylindrique 16, des corps roulants cylindriques 18 qui peuvent être indifféremment des rouleaux cylindriques ou des aiguilles, et une bague d'assemblage élastique 20 qui a été étirée élastiquement de manière à entourer les corps roulants 18 et à les presser radialement contre le chemin de roulement intérieur 16 de la bague intérieure 14. La bague intérieure 14 présente un profil en U, avec deux épaulements 22 situés axialement de part et d'autre du chemin de roulement 16, de façon à guider les corps roulants 18. Chaque épaulement 22 est pourvu sur une face 24 tournée radialement vers l'intérieur, d'une gorge annulaire 26 dont la largeur est de préférence supérieure à celle de la bague d'assemblage élastique 20. La bague d'assemblage élastique 20 donne au sous-ensemble 10 sa cohérence, et permet de le pré-assembler, le stocker et le livrer le cas échéant tel quel en vue de son montage ultérieur dans la bague extérieure de roulement 12.

La bague extérieure 12 présente une face annulaire plane 28, un chemin de roulement cylindrique 30 et un épaulement 32, ce dernier étant optionnel. Un chanfrein 33 peut être prévu entre la face annulaire plane 28 et le chemin de roulement cylindrique 30.

Pour monter le sous-ensemble préassemblé 10 dans la bague extérieure 12, on procède comme suit. Après avoir présenté le sous-ensemble 10 dans l'axe 100 de la bague extérieure 12 comme illustré sur la figure 1, on fait pénétrer le sous-ensemble 10 axialement dans la bague extérieure 12, ce qui est rendu possible par un faible jeu radial fonctionnel entre la bague extérieure 12 et les corps roulants 18 en appui sur le chemin de roulement 16 de la bague intérieure 14. Au cours de cette insertion, et comme illustré sur la figure 2, les corps roulants 18 sont maintenus en position relativement à la bague intérieure 14 par l'un des épaulements 22 et la bague d'assemblage élastique 20, dont le diamètre extérieur est supérieur à celui du chemin de roulement extérieur 30, vient en appui contre la face annulaire plane 28 de la bague extérieure 12, de préférence au moins partiellement hors de la zone du chanfrein 33, et la poursuite du mouvement d'insertion s'accompagne d'une migration progressive de la bague d'assemblage élastique 20 qui glisse axialement sur les corps roulants 18. Lorsque la bague d'assemblage élastique 20 atteint l'extrémité axiale des corps roulants 18, elle se détend partiellement comme illustré sur la figure 3, et vient se positionner dans la gorge 26 où elle se trouve maintenue dans la mesure où le périmètre de la gorge 26 est supérieur au périmètre de la bague d'assemblage élastique 20 non sollicitée et/ou la largeur de la gorge 26, mesurée dans le sens axial, est supérieure à la largeur de la bague d'assemblage élastique 20.

Ce mode de montage est particulièrement adapté à une situation dans laquelle la bague extérieure 12 est peu accessible pour le montage, et notamment lorsqu'elle se trouve dans un carter, par exemple un carter moteur ou un carter de boîte de transmission. À l'issue du montage, la bague d'assemblage élastique 20 a vocation à rester en position dans la gorge 26 pour toute la durée de la vie du palier. La symétrie du sous-ensemble 10 permet d'effectuer le montage sans se soucier de l'orientation du sous-ensemble 10.

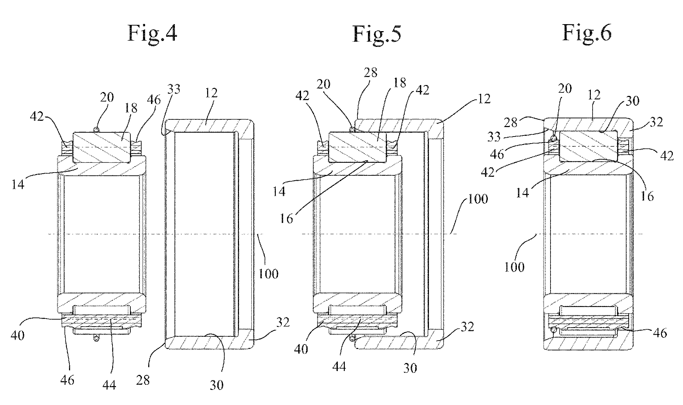

Sur les figures 4 à 6 est illustrée une variante de réalisation, qui diffère du mode de réalisation précédent par l'adjonction d'une cage 40 de guidage des corps roulants cylindriques 18. Cette cage présente des alvéoles, qui dans l'exemple considéré ne sont pas enveloppantes, de sorte qu'elles sont en mesure de guider les corps roulants cylindriques 18 lorsque ceux-ci roulent sur les chemins de roulement intérieur 16 et extérieur 30, mais qui ne permettent pas de retenir les corps roulants 18 dans la position de la figure 4, en l'absence de bague extérieure 12. La cage 40 est constituée de deux anneaux d'extrémité 42 reliés par des pontets 44 délimitant les alvéoles, et situés axialement de part et d'autre des corps roulants 18. Sur chaque anneau 42 est formée une gorge annulaire 46 tournée radialement vers l'extérieur, et dont la fonction est la même que la gorge 26 du premier mode de réalisation.

Il est à noter que dans les deux modes de réalisation, le sous-ensemble est de préférence symétrique par rapport à un plan médian perpendiculaire à l'axe de révolution défini par le chemin de roulement intérieur.

## Revendications

1. Procédé de montage de corps roulants cylindriques (18) à l'intérieur d'un organe extérieur creux (12) dans lequel est formé un chemin de roulement extérieur annulaire (30) tourné radialement vers l'intérieur, selon lequel:
- on maintient les corps roulants cylindriques (18) radialement en appui contre une face cylindrique (16) tournée radialement vers l'extérieur d'un organe intérieur (14), à l'aide d'une bague d'assemblage élastique (20) étirée dans un état étiré entourant les corps roulants cylindriques (18) de manière à former un sous-ensemble cohérent (10); puis
- on insère le sous-ensemble cohérent (10) dans l'organe extérieur (12) de façon à ce que les corps roulants cylindriques (18) viennent en regard du chemin de roulement extérieur (30), par un mouvement de translation axiale provoquant une mise en appui de la bague d'assemblage élastique (20) contre une face d'appui (28) de l'organe extérieur (12), puis une migration axiale de la bague d'assemblage élastique (20) par rapport aux corps roulants cylindriques (18), puis une éjection de la bague d'assemblage élastique (20) qui libère les corps roulants cylindriques (18),
**caractérisé en ce que** l'éjection de la bague d'assemblage élastique (20) provoque une détente partielle de la bague d'assemblage élastique (20) qui rétrécit en venant se positionner en appui sur une portée annulaire de retenue (24) présentant un périmètre inférieur au périmètre de la bague d'assemblage élastique (20) dans l'état étiré et supérieur au périmètre de la bague d'assemblage élastique (20) dans un état complètement détendu, la portée de retenue (24) étant située axialement à distance des corps roulants cylindriques (18).

2. Procédé de montage selon la revendication 1, **caractérisé en ce que** l'on insère le sous-ensemble cohérent (10) dans l'organe extérieur (12) par une ouverture de l'organe extérieur (12) ayant un diamètre supérieur ou égal au diamètre du chemin de roulement extérieur (30).

3. Sous-ensemble cohérent (10) destiné à un palier à roulement et comportant au moins un organe intérieur (14) sur lequel est formée une face cylindrique (16) tournée radialement vers l'extérieur et définissant un axe d'insertion (100), des corps roulants cylindriques (18), et une bague d'assemblage élastique (20) étirée dans un état étiré entourant les corps roulants cylindriques (18) et les maintenant radialement en contact avec la face cylindrique (16) **caractérisé en ce qu'**il comporte en outre au moins une portée de retenue (24) présentant un périmètre inférieur au périmètre de la bague d'assemblage élastique (20) dans l'état étiré et supérieur au périmètre de la bague d'assemblage élastique (20) dans un état complètement détendu, la portée de retenue (24) étant située axialement à distance des corps roulants cylindriques (18).

4. Sous-ensemble cohérent selon la revendication 3, **caractérisé en ce que** le sous-ensemble (10) présente un plan de symétrie perpendiculaire à l'axe d'insertion (100).

5. Procédé de montage selon l'une quelconque des revendications 1 ou 2, ou sous-ensemble selon l'une quelconque des revendications 3 ou 4, **caractérisé en ce que** la face cylindrique (16) de l'organe intérieur est un chemin de roulement intérieur.

6. Palier à roulement comportant au moins un organe intérieur (14) sur lequel est formé un chemin de roulement intérieur (16) annulaire tourné radialement vers l'extérieur et définissant un axe de révolution (100) du palier, un organe extérieur creux (12) dans lequel est formé un chemin de roulement extérieur (30) annulaire tourné radialement vers l'intérieur et des corps roulants cylindriques (18), **caractérisé en ce qu'**il comporte en outre une bague d'assemblage élastique (20) sous tension enserrant une portée de retenue (24) située axialement à distance des corps roulants (18), la bague d'assemblage élastique (20) étant apte à se déformer élastiquement de manière à atteindre un diamètre extérieur supérieur au diamètre du chemin de roulement extérieur (30).

7. Procédé de montage selon l'une quelconque des revendications 1 ou 2, sous-ensemble selon l'une quelconque des revendications 3 à 5 ou palier à roulement selon la revendication 6, **caractérisé en ce que** la portée de retenue (24) est solidaire de l'organe intérieur (14).

8. Procédé de montage selon l'une quelconque des revendications 1 ou 2, sous-ensemble selon l'une quelconque des revendications 3 à 5 ou palier à roulement selon la revendication 6, **caractérisé en ce que** la portée de retenue (24) est solidaire d'une cage de guidage (40) des corps roulants cylindriques (18).

9. Procédé de montage selon l'une quelconque des revendications 1 ou 2, sous-ensemble selon l'une quelconque des revendications 3 à 5 ou palier à roulement selon la revendication 6, ou selon l'une quelconque des revendications 7 ou 8, **caractérisé en ce que** l'organe intérieur (14) est une bague intérieure de roulement, un axe de pivotement ou un arbre.

10. Procédé de montage selon l'une quelconque des revendications 1 ou 2, sous-ensemble selon l'une quelconque des revendications 3 à 5 ou palier à roulement selon la revendication 6, ou selon l'une quelconque des revendications 7 à 9, **caractérisé en ce que** l'organe intérieur (14) comporte au moins un épaulement (22) de guidage des corps roulants cylindriques (18).

11. Procédé de montage, sous-ensemble ou palier à roulement selon la revendication 10, **caractérisé en ce que** la portée de retenue (24) est formée sur l'épaulement (22).

12. Procédé de montage selon l'une quelconque des revendications 1 ou 2, sous-ensemble selon l'une quelconque des revendications 3 à 5 ou palier à roulement selon la revendication 6, ou selon l'une quelconque des revendications 7 à 11, **caractérisé en ce que** l'organe extérieur (12) est une bague extérieure de roulement.

13. Procédé de montage selon l'une quelconque des revendications 1 ou 2, sous-ensemble selon l'une quelconque des revendications 3 à 5 ou palier à roulement selon la revendication 6, ou selon l'une quelconque des revendications 7 à 12, **caractérisé en ce que** la portée de retenue (24) comporte une gorge annulaire (26).

14. Procédé de montage, sous-ensemble ou palier à roulement selon la revendication 13, **caractérisé en ce que** la gorge annulaire (26) a une largeur mesurée axialement qui est plus grande que la largeur de la bague d'assemblage élastique (20), mesurée axialement.

15. Procédé de montage selon l'une quelconque des revendications 1 ou 2, sous-ensemble selon l'une quelconque des revendications 3 à 5 ou palier à roulement selon la revendication 6, ou selon l'une quelconque des revendications 7 à 14, **caractérisé en ce que** la bague d'assemblage élastique (20) présente une section circulaire.
